# EUROPÄISCHE PATENTSCHRIFT

(11) **EP 0 740 995 B1**
(45) Veröffentlichungstag und Bekanntmachung des Hinweises auf die Patenterteilung: **06.11.2002**
(21) Anmeldenummer: 96104298.3
(22) Anmeldetag: 19.03.1996
(51) Int. Cl.: B29C 49/56, B29C 33/20, B29C 45/67

(54) **Verfahren und Vorrichtung zum Schliessen des Werkzeugs einer Kunstoffverarbeitungsmaschine**
Process and apparatus for the closing of the tool of a plastic processing machine
Procédé et appareil pour la fermeture de l'outil d'une machine à fabrication de plastique

(30) Priorität: 03.05.1995 DE 19516125
(43) Veröffentlichungstag der Anmeldung: 06.11.1996
(73) Patentinhaber: SIG Kautex GmbH & Co. KG, 53229 Bonn (DE)
(72) Erfinder: Wollschläger, Dieter, 53639 Königswinter (DE); Maier, Rudolf, 53797 Lohmar (DE); Helmenstein, Axel, 51674 Wiehl (DE)
(74) Vertreter: Valentin, Ekkehard, Dipl.-Ing.

(56) Entgegenhaltungen:
- DE-A- 3 034 024
- DE-A- 4 243 735
- PATENT ABSTRACTS OF JAPAN vol. 095, no. 002, 31.März 1995 & JP 06 304984 A (MITSUBISHI HEAVY IND LTD), 1.November 1994,
- PATENT ABSTRACTS OF JAPAN vol. 015, no. 272 (M-1134), 10.Juli 1991 & JP 03 092311 A (MEIKI CO LTD), 17.April 1991,

## Beschreibung

Die Erfindung betrifft ein Verfahren und eine Vorrichtung zum Schließen des Werkzeugs einer Kunststoffverarbeitungsmaschine, insbesondere einer Blasformmaschine, mit den in den Oberbegriffen der unabhängigen Ansprüche angegebenen Merkmalen.

Eine Formmaschine mit einer solchen hydraulischen Schaltung ist durch die DE 42 43 735 A1 bekanntgeworden. Sie dient dem raschen Austausch von Arbeitsöl zwischen den vorderseitigen und rückseitigen Ölkammern der Zuhaltezylinder, mit dem Ziel, einen schnelleren Druckanstieg als herkömmlich zu erzeugen. Jeder einzelnen Ölkammer wird das Öl unabhängig von der anderen Ölkammer zugeführt bzw. abgezogen.

Der Erfindung liegt die Aufgabe zugrunde, ein Verfahren und eine Vorrichtung der eingangs genannten Art gemäß den Merkmalen des Oberbegriffs der Ansprüche 1 und 3 zu schaffen, die preiswert und zuverlässig arbeiten und insbesondere einen prozeßökonomischen, sanften Übergang von der Fahrphase zur Schließphase einschließlich der Durchführung der Schließphase ermöglichen.

Diese Aufgabe wird mit einem Verfahren erfindungsgemäß durch die im kennzeichnenden Teil des unabhängigen Anspruchs 1 angegebenen Merkmale gelöst. Mit einer kostengünstigen hydraulischen Schaltung wird damit erreicht, daß ein sanfter Übergang von der Fahrbewegung in die Schließbewegung stattfindet. Durch die zentrale Beaufschlagung aller Schließantriebe ergibt sich in Kombination mit der vorgeschlagenen Schaltung ein zeitoptimierter Prozeßzyklus.

Vorteilhafterweise ist weiterhin vorgesehen, daß vor der Verriegelung der Kolbenstange mit dem Gegenstück diese in eine definierte Position, insbesondere in eine vordere Anschlagsposition, gefahren wird. Die einzelnen Kolbenstangen befinden sich also zu dem Zeitpunkt, zu dem sie in die Verriegelungsklauen einfahren, in definierter Lage; es wird also bewerkstelligt, daß sich die Kolbenstangen der einzelnen Schließantriebe vor dem Verriegelungsvorgang in dieser definierten Position befinden, wodurch die regelungstechnische Überwachung der jeweiligen Kolbenstangenpositionen gemäß dem Stand der Technik entbehrlich ist. Dieser Verfahrensschritt macht die zentrale Steuerung des Schließvorgangs in Verbindung mit den obigen Maßnahmen sehr einfach.

Die erfindungsgemäße Vorrichtung ist gemäß den Merkmalen des kennzeichnenden Teils des Anspruchs 3 dadurch gekennzeichnet, daß Mittel vorgesehen sind, die nach der Verriegelung der Kolbenstange (11) mit dem Gegenstück (13) den Zylindern (9) über den Zufluß (14) einen definierten Hydraulikstrom (dV/dt) zuführen, daß der Zufluß (14) und der Abfluß (15) mit einer Leitung (16) verbunden sind, in der ein Rückschlagventil (17) so vorgesehen ist, daß Hydrauliköl vom Abfluß (15) zum Zufluß (14) strömen kann, und daß der Abfluß (15) über ein Druckventil (18) mit einem Hydrauliktank (19) verbunden ist.

Vorteilhafterweise sind nach einer Weiterbildung der Erfindung die Zylinder (9) der Schließantriebe (8) so lang (L) ausgebildet, daß zwecks Werkzeugwechsel (1, 2) die Kolbenstangen (11) mit den sich an ihrem Ende befindlichen Riegelelementen (12) vollständig aus dem Werkzeugbereich bzw. aus dem Werkzeugaufspannplattenbereich (3, 4) herausgefahren werden können.

In der Zeichnung ist ein Ausführungsbeispiel der Erfindung dargestellt:
- Fig. 1: zeigt schematisch den Aufbau einer Blasformmaschine,
- Fig. 2: stellt schematisch die hydraulische Schaltung eines Schließzylinders dar und
- Fig. 3: zeigt den Geschwindigkeitsverlauf einer Werkzeughälfte über der Zeit.

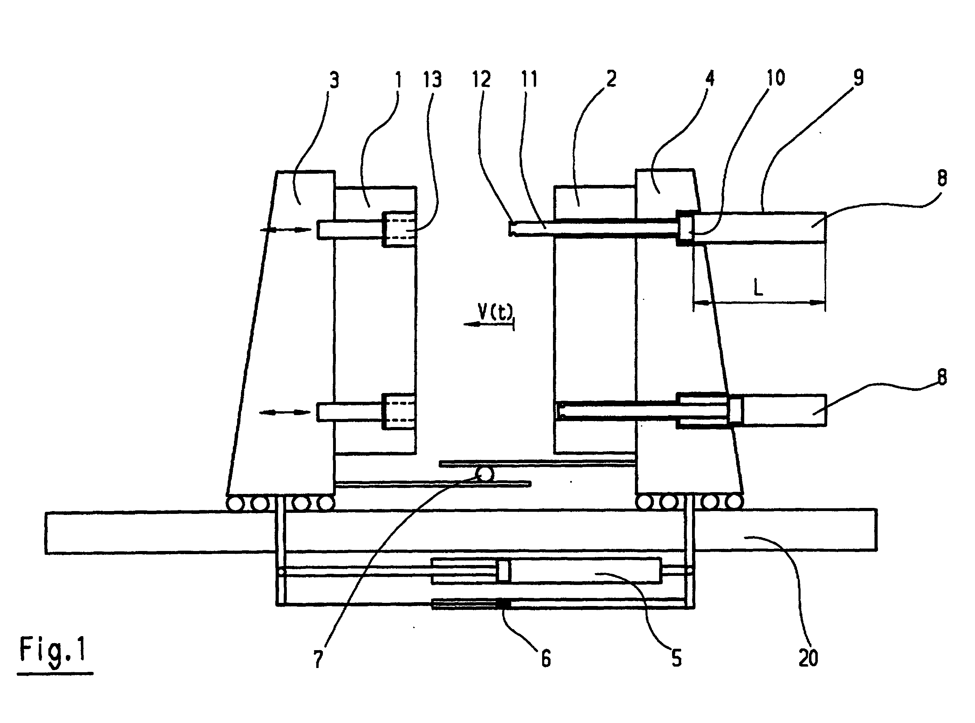

Die Blasformmaschine gemäß Fig. 1 besteht aus einem Maschinenfundament 20, auf dem zwei Werkzeugaufspannpatten 3 und 4 angeordnet sind. Jede dieser Platten trägt eine Werkzeughälfte 1 bzw. 2 eines Blasformwerkzeugs. Nicht dargestellt ist ein Speicherkopf o. ä., der Blasform-Vorformlinge herstellt und diese von oben in den Werkzeugbereich abgibt, wo sie durch den Blasformvorgang in bekannter Weise weiterverarbeitet werden. Zum Blasformen einerseits und zum Entformen des fertigen Werkstücks andererseits sind die Werkzeugaufspannplatten 3 und 4 auf dem Maschinenfundament verschieblich angeordnet, was durch Rollen angedeutet ist, die zwischen Platten 3, 4 und Fundament 20 vorgesehen sind.

Die Fahrbewegung von der vollständig geöffneten Position des Werkzeugs 1, 2 bis in die Geschlossen-Position wird durch einen Fahrantrieb 5 bewerkstelligt. Dessen jeweiliger Fahrweg wird durch einen Wegaufnehmer 6 erfaßt und der - nicht dargestellten - Maschinensteuerung gemeldet. Um beide Werkzeugaufspannplatten 3 und 4 symmetrisch auf- und zuzubewegen, wirkt die Fahrbewegung des Fahrantriebs 5 auf ein Gleichlaufelement 7, das daführ Sorge trägt, daß sich beide Werkzeughälften 1, 2 symmetrisch zu der - nicht dargestellten - Mittelachse des Schließmechanismus bewegt. Natürlich kann derselbe Effekt auch erzielt werden, wenn zwei Fahrantriebe 5 verwendet werden. Bei dem Antrieb 5 handelt es sich im vorliegenden Fall um hydraulische Langhubzylinder mit kleiner Kolbenfläche, um Elemente also, die bei relativ kleinen Kräften große Verstellbewegungen ausführen können. Alternativ dazu ist es natürlich genauso möglich, daß elektrisch oder pneumatisch arbeitende Fahrantriebe eingesetzt werden können.

Ist der größte Teil des gesamten Schließweges gefahren, wird die Schließkraft auf das Werkzeug 1, 2 aufgebracht, wozu die Schließantriebe 8 dienen. Hierbei handelt es sich um hydraulische Kolben-Zylinder-Systeme, die über kurze Wege hohe Schließkräfte erzeugen können. Ein Zylinder 9 nimmt einen Kolben 10 auf, der mit einer Kolbenstange 11 verbunden ist. Im vorliegenden Fall ist der Zylinder kraftschlüssig mit der Werkzeugaufspannplatte 4 verbunden. Zur Übertragung der Schließkraft wird bei weitgehend geschlossenem Werkzeug 1, 2 eine Verriegelung der Kolbenstange 11 mit dem Gegenstück 13 vorgenommen. Dieses befindet sich hier in der Werkzeughälfte 1, kann jedoch - um die jeweilige Werkzeugeinbauhöhe einzustellen - auf die benötigte Lage eingestellt werden, was durch die Doppelpfeile in Fig. 1 angedeutet ist. Das Riegelelement 12, das sich am Ende der Kolbenstange 11 befindet, wird dabei vom Gegenstück 13 gegriffen und festgehalten; das Gegenstück ist kraftschlüssig in der Werkzeughälfte 1 fixiert.

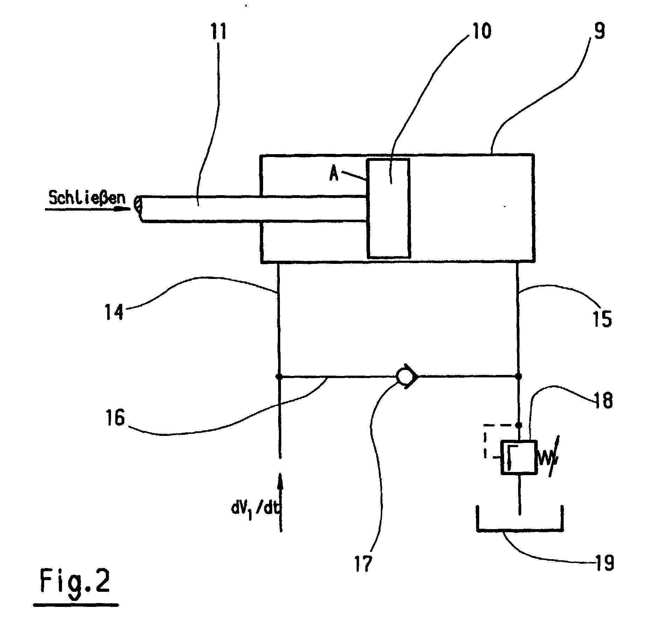

In Fig. 2 ist zu sehen, wie der Schließkraftaufbau bewerkstelligt wird. Vom Grundsatz her wird in bekannter Weise über einen Zufluß 14 Hydrauliköl in den Zylinder 9 gepumpt. Hierdurch bewegt sich der Kolben 10 und damit die Kolbenstange 11 im Zylinder in Richtung "Schließen".

Erfindungsgemäß ist vorgesehen, daß alle Schließantriebe 8 zum Schließen des Werkzeugs 1, 2 von einer gemeinsamen Steuerung oder Regelung angesteuert werden, was bedeutet, daß gleichzeitig ein Volumenstrom in die jeweiligen Zuflüsse 14 gepumpt wird. Eine Synchronisation zwischen den einzelnen Schließantrieben ist nicht vorgesehen, die gesamte Schließbewegung von vollständiger Offen-Position bis zum krafthaltigen Verschließen des Werkzeugs 1, 2 erfolgt trotz des Übergangs von der Bewegung des Fahrantriebs 5 zu der der Schließantriebe 8 in kontinuierlicher Weise und ohne Unterbrechung des Schließvorgangs.

Daß dies ohne regelungstechnischen Aufwand und ohne ein Verkanten des Werkzeugs bzw. der Aufspannplatten geschieht, wird durch folgende Ausgestaltung zuverlässig ermöglicht.

Der Zufluß 14 jedes Zylinder 9 steht mit dem Abfluß 15 in Verbindung, und zwar über eine Leitung 16. In dieser ist ein Rückschlagventil 17 angeordnet, und zwar so, daß Hydrauliköl vom Abfluß 15 zum Zufluß 14 strömen kann, sofern entsprechende Druckverhältnisse herrschen. Der Abfluß 15 steht weiterhin über ein Druckventil 18 mit einem Hydrauliktank 19 in Verbindung. Das Druckventil kann auf einen gewünschten Ansprechdruck eingestellt werden.

Erfindungsgemäß ist nunmehr vorgesehen, daß nach der Verriegelung der Kolbenstange 11 mit dem Gegenstück 13 über den Zufluß 14 ein definierter Hydraulikstrom dV/dt dem Zylinder 9 zugeführt wird. Hierdurch wird ein allmählicher sanfter Kraftaufbau im Schließantrieb erzeugt, wie sich durch folgende Funktionweise ergibt:

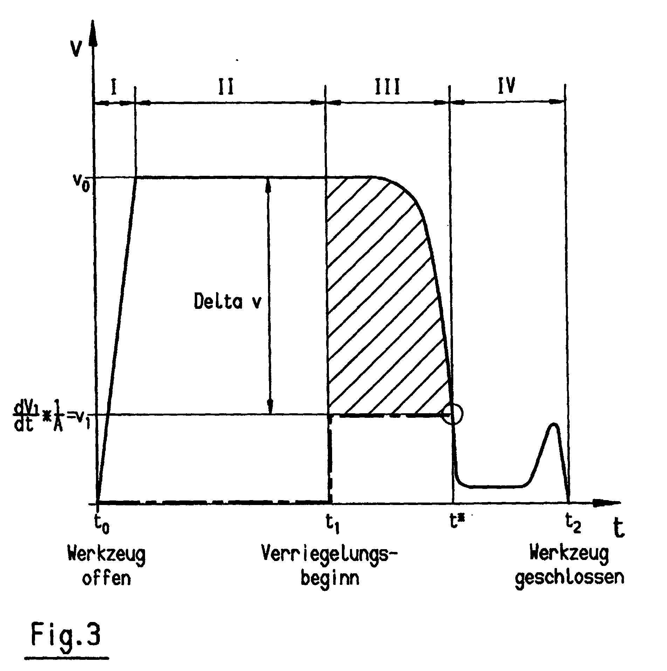

In Fig. 3 ist der Verlauf der Geschwindigkeit v einer Werkzeughälfte 2 über der Zeit t dargestellt, wobei sich vereinfacht die Überlegungen auf eine bewegliche Werkzeughälfte 2 beziehen, die gegen eine fest angeordnete Werkzeughälfte 1 fährt. Analoges gilt jedoch, wenn man die Relativgeschwindigkeit der beiden Formhälften 1 und 2 in Fig. 1 betrachtet.

Durch einen Fahrantrieb 5 wird die bewegliche Werkzeughälfte beschleunigt, und zwar auf eine Geschwindigkeit vₒ, s. ausgezogene Kurve in Fig. 3: Phase I. Ist die Werkzeughälfte während Phase II weit genug verfahren, bis daß das Riegelelement 12 in das Gegenstück 13 eingreifen kann, beginnt die Verriegelung der Kolbenstange 11 mit der Werkzeughälfte 1 (Endzeitpunkt der Phase II, Zeitpunkt t₁ - Verriegelungsbeginn). Bis dahin - also während Phase I und II - ruhte der Kolben 10, s. Fig. 2, im Zylinder 9, so daß keinerlei Hydrauiköl floß.

Dargestellt ist der Fall, daß in Phase II eine konstante Geschwindigkeit vorliegt. Möglich ist es aber auch, daß sich die Geschwindigkeit zum Ende der Phase II hin bereits reduziert.

Ab dem Zeitpunkt t₁, s. Fig. 3, also ab dem Verriegelungsbeginn der Kolbenstange 11, wird diese jedoch im Zylinder 9 verschoben, weil die Kolbenstange nach dem Eintauchen in das Gegenstück 13 durch die Bewegung des Fahrantriebs 5 zunächst "mitgenommen" wird, so daß - s. Fig. 2 - im rechten Zylinderraum (rechts des Kolbens 10) Öl verdrängt wird und im linken Zylinderraum (links des Kolbens 10) Öl nachgefüllt werden muß. Dies geschieht an sich bereits durch die Verbindungsleitung 16: Bei entsprechender Einstellung des Druckventils 18 wird zunächst das im linken Zylinderraum notwendige Ölvolumen über den Abfluß 15 und die Leitung 16 dem Zufluß 14 zugeführt ("Umwälzung"); da die Verdrängungs- bzw. Nachführvolumina durch die Wirkfläche der Kolbenstange jedoch unterschiedlich sind (es wird "rechts" mehr Öl verdrängt, als "links" nachgefüllt werden muß), tritt der Differenzbetrag über das Druckventil 18 in den Hydrauliktank 19 aus.

Erfindungsgemäß wird jedoch nach Verriegelungsbeginn der Kolbenstange 11 mit dem Gegenstück 13 (Zeitpunkt t₁) über den Zufluß 14 des weiteren ein definierter Hydraulikstrom dV₁/dt (s. Fig. 2) dem Zylinder 9 zugeführt. Dieser Hydraulikstrom ist kleiner oder gleich dem Wert, der sich bei Multiplikation der effektiven Kolbenfläche A im linken Zylinderraum mit der Geschwindigkeit vₒ ergibt. In Fig. 3 ist strichpunktiert der Verlauf des Volumenstroms dV/dt eingetragen, jedoch dividiert durch die entsprechende effektive Wirkfläche A des Kolbens, so das der Volumenstrom in eine Geschwindigkeit umgerechnet ist.

Im vorliegenden Fall setzt der Volumenstrom dV₁/dt unmittelbar zum Verriegelungsbeginn ein; es kann jedoch auch ein späterer Zeitpunkt für die mit diesem Volumenstrom vorgesehen werden. Genauso ist es keinen konstanten, sondern einen zeitvariablen Volumenstrom vorzusehen; aus Gründen der Übersichtlichkeit ist jedoch im Ausführungsbeispiel ein konstanter Strom gewählt.

Damit ist bei gegebener Geschwindigkeit vₒ und gegebenem Volumenstrom dV₁/dt nur noch ein geringerer Ölvolumenstrom über die Leitung 16 in den linken Zylinderraum zu überführen: Über die Leitung 16 geleitet werden muß nur noch der Volumenstrom, der sich aus der Differenzgeschwindigkeit Delta v, s. Fig. 3, multipliziert mit der Wirkfläche A ergibt; der entsprechende (Zeit- und Delta-v-)Bereich, der der Leitung 16 eine Strömung verursacht, ist in Fig. 3 schraffiert dargestellt (Phase III).

Während Phase III fährt im Ausführungsbeispiel die Werkzeughälfte mit unverminderter Geschwindigkeit weiter, angetrieben alleine durch den Fahrantrieb 5. Nähert sie sich jedoch der Geschlossen-Position, tritt ein erhöhter Widerstand auf, beispielsweise dadurch, daß hier das Abquetschen des Blasformschlauchs beginnt. Der Fahrantrieb 5 ist durch seine begrenzte Kraft nicht mehr in der Lage, die Geschwindigkeit v der Werkzeughälfte aufrechtzuerhalten, wodurch v abfällt; die Abnahme der Geschwindigkeit kann aber auch durch gezielte Verlangsamung des Fahrantriebs 5 vorgenommen werden. Hierbei ist die Werkzeuggeschwindigkeit jedoch noch größer als die Geschwindigkeit, die sich ergibt, wenn der Volumenstrom dV₁/dt durch die effektive Fläche A des Kolbens 10 dividiert wird; es findet also immer noch ein Ölstrom vom Abfluß 15 über die Leitung 16 zum Zufluß 14 statt, um das im "linken" Zylinderraum nachzufüllende Volumen herbeizuschaffen. Möglich ist es natürlich auch, dem Fahrantrieb 5 eine sich gezielt reduzierende Geschwindigkeit vorzugeben, wodurch z. B. die Geschwindigkeit beim Eintauchen des Riegelelements 12 in das Gegenstück 13 vermindert ist.

Nähert sich die bewegliche Werkzeughälfte der festen, muß die Geschwindigkeit allmählich abnehmen, um bei Kontakt beider Hälften auf Null abzusinken, s. Fig. 3, Phase IV. Durch die weiter ansteigende Schließkraft ist der Fahrantrieb nicht mehr in der Lage, eine weitere Werkzeugbewegung zu bewerkstelligen. Alleine durch die Schließantriebe 8 wird das Werkzeug weiter geschlossen. In dieser Phase ist die Geschwindigkeit jedoch bereits unter den Wert von v₁ abgefallen, so daß nun kein Ausgleichsvolumenstrom mehr über die Leitung 16 fließt. Vielmehr ergibt sich die weitere Werkzeuggeschwindigkeit alleine durch Vorgabe des Volumenstroms dV/dt, der bis zum vollständigen Schließen des Werkzeugs weiterhin dem Zufluß 14 zugeführt wird. Freilich nimmt dieser - gemäß dem gewünschten Geschwindigkeitsprofil (s. Verlauf während Phase IV in Fig. 3) laufend ab, was durch eine entsprechende Steuerung oder Regelung bewerkstelligt wird, bis das Werkzeug zum Zeitpunkt t₂ vollständig geschlossen ist.

Der Geschwindigkeitsverlauf ist gerade in der letzten Phase des Schließens von großer Bedeutung. Es wird daher meist vorgesehen, daß in Phase IV die Geschwindigkeit kurz vor Werkzeugschluß nochmals kurzzeitig angehoben wird (s. "Hügel" zum Schluß der Phase IV). Der Grund hierfür ist, daß die Geschwindigkeit gerade in dieser letzten Schließphase entscheidend für die Schweißnahtbildung ist. Kurz vor Ende des Schließens der Blasform wird die Geschwindigkeit nochmals erhöht, um durch dies sogenannte Nachschlagen den Restfilm und somit das spätere Entbutzen möglichst gering zu halten.

Der entscheidende Zeitpunkt für den Übergang von Fahrantrieb auf Schließantrieb ist t*: Ab diesem Zeitpunkt spielt die Bewegung des Fahrantriebs 5 keine Rolle mehr, die Bewegung wird alleine durch die Schließantriebe 8 vorgenommen. In den Schließzylindern 9 wird ab t* automatisch Druck aufgebaut, wodurch sich die Schließkraft entwickeln kann. Die Verriegelung der Kolbenstangen 11 mit den Gegenstücken 13 muß spätestens zum Zeitpunkt t* abgeschlossen sein. Zu diesem Zeitpunkt beträgt die Geschwindigkeit v₁ = (dV₁/dt) x 1/A(s. Fig. 3).

Zum Schließen des Werkzeugs 1, 2 werden zunächst die Kolben 10 in den Schließantrieben 8 in ihren "vorderen" Anschlag gefahren; diese Position ist in Fig. 1 für den oberen der beiden Schließantriebe 8 dargestellt. Im allgemeinen kommt es nur darauf an, daß eine definierte Position der Kolbenstange 11 im Zylinder 9 eingenommen wird. Damit wird es nämlich ermöglicht, daß im weiteren Schließverlauf mittels des vorgeschlagenen Schließverfahrens der Bewegung der Kolbenstangen 11 keine Beachtung mehr geschenkt werden muß; eine - wie im Stand der Technik übliche - Abfrage, wo die Kolbenstangen aktuell stehen sowie eine entsprechende Berücksichtigung bei der Steuerung ist nicht mehr erforderlich.

Für das Entformen des fertigen Werkstücks werden die Kolbenstangen 11 mittels der Schließantriebe 8 zurückgefahren, so daß sie der Entformung nicht im Wege stehen. Diese Stellung ist beim unteren der beiden abgebildeten Schließantriebe 8 in Fig. 1 dargestellt. Die Öffnung des Werkzeugs nach erfolgtem Blasformvorgang wird durch den Fahrantrieb 5 vorgenommen.

Durch die beschriebene Vorrichtungsausgestaltung und Wirkungsweise ist sichergestellt,
- daß ein sanfter Übergang vom Fahrantrieb zum Schließantrieb stattfindet,
- daß eine einfache und damit preiswerte und zuverlässige Schließvorrichtung zum Einsatz kommt,
- daß es keine Abstimmungs- bzw. Regelungsprobleme zwischen den Betriebsweisen Fahrantrieb und Schließantrieb gibt, womit schließlich erreicht wird,
- daß eine zentrale und gemeinsame Steuerung bzw. Regelung für alle Schließantriebe 8 eingesetzt werden kann, ohne daß eine Synchronisationseinrichtung für die einzelnen Schließantriebe nötig wäre, wobei gleichzeitig garantiert ist, daß es zu einem kontinuierlichen Schließvorgang ohne Unterbrechungen kommt.

In vorteilhafter Ausbildung ist die Länge L der Schließzylinder 9 weit größer gehalten, als dies für das Schließen des Werkzeugs in der genannten Weise nötig wäre. Damit wird erreicht, daß die Kolbenstange 11 zwecks Werkzeugwechsel vollständig aus dem Bereich des Werkzeugs 1, 2 bzw. der Werkzeugaufspannplatten 3, 4 herausgefahren werden kann. Dadurch ist der Werkzeugwechsel leichter zu bewerkstelligen.

Wenngleich sich die Ausführungen auf das Verschließen des Werkzeugs beziehen, kann das erfindungsgemäße Verfahren analog angewendet werden, um das Werkzeug nach erfolgtem Blasformvorgang wieder zu öffnen.

### Bezugszeichenliste:

- 1, 2: Werkzeughälften
- 3, 4: Werkzeugaufspannplatten
- 5: Fahrantrieb
- 6: Wegaufnehmer
- 7: Gleichlaufelement
- 8: Schließantriebe
- 9: Zylinder
- 10: Kolben
- 11: Kolbenstange
- 12: Riegelelement
- 13: Gegenstück
- 14: Zufluß
- 15: Abfluß
- 16: Leitung
- 17: Rückschlagventil
- 18: Druckventil
- 19: Hydrauliktank
- 20: Fundament

- v(t): Schließgeschwindigkeit des Werkzeugs
- dV/dt: Volumenstrom des Hydrauliköls
- A: Kolbenfläche

## Patentansprüche

1. Verfahren zum Schließen des Werkzeugs einer Kunststoffverarbeitungsmaschine, insbesondere einer Blasformmaschine, die aufweist:
- ein mindestens zweiteiliges Werkzeug (1, 2), das von mindestens zwei Werkzeugaufspannplatten (3, 4) getragen wird;
- mindestens einen Fahrantrieb (5), der das Werkzeug (1, 2) über einen großen Hub bei relativ geringer Kraft von einer Offen-Position in eine Geschlossen-Position bewegt;
- mindestens zwei Schließantriebe (8), die das Werkzeug (1, 2) über einen kleinen Hub bei relativ großer Kraft in die Geschlossen-Position bewegen,
- wobei die Schließantriebe (8) jeweils aus einem hydraulischen Kolben-Zylindersystem mit einem Zylinder (9), einem Kolben (10) und einer Kolbenstange (11) bestehen und am Zylinder (9) ein Zufluß (14) und ein Abfluß für Hydrauliköl vorgesehen ist,
- wobei die Kolbenstange (11) an ihrem Ende ein Riegelelement (12) trägt, daß mit einem Gegenstück (13) zusammenwirkt, und
- wobei die Verriegelung der Kolbenstange (11) mit dem Gegenstück (13) zwecks Aufbringung der Schließkraft erst dann erfolgt, wenn sich das Werkzeug (1, 2) nahe an seiner Geschlossen-Position befindet;
- wobei alle Schließantriebe (8) zum Schließen des Werkzeugs (1, 2) mit großer Kraft von einer gemeinsamen Steuerung oder Regelung angesteuert werden;
- keine Sychronisationseinrichtung zwischen den einzelnen Schließantrieben (8) vorgesehen ist; und
- die gesamte Schließbewegung des Werkzeugs (1, 2) in kontinuierlicher Weise und ohne Unterbrechung des Schließvorgangs erfolgt,
**dadurch gekennzeichnet,**
**daß** nach der Verriegelung der Kolbenstange (11) mit dem Gegenstück (13) über den Zufluß (14) ein definierter Hydraulikstrom (dV/dt) den Zylindern (9) zugeführt wird,
- wobei der Zufluß (14) und der Abfluß (15) mit einer Leitung (16) verbunden sind, in der ein Rückschlagventil (17) so vorgesehen ist, daß Hydrauliköl vom Abfluß (15) zum Zufluß (14) strömen kann und
- wobei der Abfluß (15) über ein Druckventil (18) mit einem Hydrauliktank verbunden ist.

2. Verfahren zum Schließen des Werkzeugs nach Anspruch 1,
**dadurch gekennzeichnet,**
**daß** vor der Verriegelung der Kolbenstange (11) mit dem Gegenstück (13) diese in eine definierte Position, insbesondere in eine vordere Anschlagsposition, gefahren wird.

3. Vorrichtung zur Durchführung des Verfahrens nach Anspruch 1 oder 2, die aufweist:
- ein mindestens zweiteiliges Werkzeug (1, 2), das von mindestens zwei Werkzeugaufspannplatten (3, 4) getragen wird;
- mindestens einen Fahrantrieb (5), der das Werkzeug (1, 2) über einen großen Hub bei relativ geringer Kraft von einer Offen-Position in eine Geschlossen-Position bewegt;
- mindestens zwei Schließantriebe (8), die das Werkzeug (1, 2) über einen kleinen Hub bei relativ großer Kraft in die Geschlossen-Position bewegen,
wobei die Schließantriebe (8) jeweils aus einem hydraulischen Kolben-Zylinder-System mit einem Zylinder (9), einem Kolben (10) und einer Kolbenstange (11) bestehen und am Zylinder (9) ein Zufluß (14) und ein Abfluß (15) für Hydrauliköl vorgesehen ist,
wobei die Kolbenstange (11) an ihrem Ende ein Riegelelement (12) trägt, das mit einem Gegenstück (13) zusammenwirkt, und
wobei die Verriegelung der Kolbenstange (11) mit dem Gegenstück (13) zwecks Aufbringung der Schließkraft erst dann erfolgt, wenn sich das Werkzeug (1, 2) nahe an seiner Geschlossen-Position befindet,
**dadurch gekennzeichnet,**
**daß** Mittel vorgesehen sind, die nach der Verriegelung der Kolbenstange (11) mit dem Gegenstück (13) den Zylindern (9) über den Zufluß (14) einen definierten Hydraulikstrom (dV/dt) zuführen,
**daß** der Zufluß (14) und der Abfluß (15) mit einer Leitung (16) verbunden sind, in der ein Rückschlagventil (17) so vorgesehen ist, daß Hydrauliköl vom Abfluß (15) zum Zufluß (14) strömen kann und
**daß** der Abfluß (15) über ein Druckventil (18) mit einem Hydrauliktank (19) verbunden ist.

4. Vorrichtung nach Anspruch 3,
**dadurch gekennzeichnet,**
**daß** die Zylinder (9) der Schließantriebe (8) so lang (L) ausgebildet sind, daß zwecks Werkzeugwechsel (1, 2) die Kolbenstangen (11) mit den sich an ihrem Ende befindlichen Riegelelementen (12) vollständig aus dem Werkzeugbereich bzw. aus dem Werkzeugaufspannplattenbereich (3, 4) herausgefahren werden können.

## Claims

1. A method for closing the tool of a plastic processing machine, in particular, a blow molding machine, comprising
- a tool (1, 2) that consists of at least two parts and is carried by at least two tool mounting plates (3, 4),
- at least one traversing drive (5) that moves the tool (1, 2) from an open position into a closed position over a long distance with a relatively low force, and
- at least two closing drives (8) that move the tool (1, 2) into the closed position over a short distance with a relatively high force,
- wherein the closing drives (8) respectively consist of a hydraulic piston/cylinder system with a cylinder (9), a piston (10) and a piston rod (11), with an inlet (14) and an outlet for the hydraulic oil being provided on the cylinder (9),
- wherein one end of the piston rod (11) carries a locking element (12) that cooperates with a counterpart (13),
- wherein the piston rod (11) and the counterpart (13) are only interlocked in order to generate the closing force once the tool (1, 2) is situated near its closed position,
- wherein all closing drives (8) for closing the tool (1, 2) with a high force are controlled by a common control,
- wherein no synchronization device is provided between the individual closing drives (8), and
- wherein the entire closing movement of the tool (1, 2) takes place continuously without interrupting the closing process,
**characterized by** the fact
that a defined volume (dV/dt) of the hydraulic medium is fed to the cylinders (9) via the inlet (14) after interlocking the piston rod (11) and the counterpart (13),
- wherein the inlet (14) and the outlet (15) are connected to a line (16) in which a check valve (17) is arranged in such a way that hydraulic oil is able to flow from the outlet (15) to the inlet (14), and
- wherein the outlet (15) is connected to a hydraulic tank via a pressure regulating valve (18).

2. The method for closing a tool according to Claim 1,
**characterized by** the fact
that the piston rod (11) is moved into a defined position, in particular, a front end position, before it is interlocked with the counterpart (13).

3. A device for carrying out the method according to Claim 1 or 2, comprising
- a tool (1, 2) that consists of at least two parts and is carried by at least two tool mounting plates (3, 4),
- at least one traversing drive (5) that moves the tool (1, 2) from an open position into a closed position over a long distance with a relatively low force, and
- at least two closing drives (8) that move the tool (1, 2) into the closed position over a short distance with a relatively high force,
- wherein the closing drives (8) respectively consist of a hydraulic piston/cylinder system with a cylinder (9), a piston (10) and a piston rod (11), with an inlet (14) and an outlet (15) for the hydraulic oil being provided on the cylinder (9),
- wherein one end of the piston rod (11) carries a locking element (12) that cooperates with a counterpart (13), and
- wherein the piston rod (11) and the counterpart (13) are only interlocked in order to generate the closing force once the tool (1, 2) is situated near its closed position,
**characterized by** the fact
that means are provided which feed a defined volume (dV/dt) of the hydraulic medium to the cylinders (9) via the inlet (14) after interlocking the piston rod (11) and the counterpart (13), by the fact
that the inlet (14) and the outlet (15) are connected to a line (16) in which a check valve (17) is arranged in such a way that hydraulic oil is able to flow from the outlet (15) to the inlet (14), and by the fact
that the outlet (15) is connected to a hydraulic tank (19) via a pressure regulating valve (18).

4. The device according to Claim 3,
**characterized by** the fact
that the cylinders (9) of the closing drives (8) have such a length (L) that the piston rods (11) with the locking elements (12) arranged on their ends can be completely moved out of the tool area and out of the tool mounting plate area (3, 4) in order to exchange the tool (1, 2).

## Revendications

1. Procédé pour la fermeture de l'outillage d'une machine de transformation de matière plastique, en particulier une machine de soufflage sur matrice, qui présente :
- un outillage (1, 2) composé d'au moins deux pièces, qui est supporté par au moins deux plaques de serrage d'outillage (3, 4) ;
- au moins une commande de conduite (5), qui fait évoluer l'outillage (1, 2) sur une longue course avec une force relativement faible d'une position ouverte en une position fermée ;
- au moins deux commandes de fermeture (8), qui font évoluer l'outillage (1, 2) sur une course courte avec une force relativement importante vers la position fermée,
- les commandes de fermeture (8) consistant respectivement en un système hydraulique à vérin-piston avec un vérin (9), un piston (10) et une tige de piston (11) et une alimentation (14) et une évacuation étant prévues pour l'huile hydraulique sur le vérin (9),
- la tige de piston (11) supportant à son extrémité un élément de verrouillage (12) qui coopère avec une contre-pièce (13), et
- le verrouillage de la tige de piston (11) avec la contre-pièce (13) aux fins d'application de la force de fermeture n'ayant lieu que lorsque l'outillage (1, 2) se trouve presque dans sa position fermée ;
- toutes les commandes de fermeture (8) pour la fermeture de l'outillage (1, 2) étant gérées avec une grande puissance par une commande ou une régulation commune ;
- aucun dispositif de synchronisation n'étant prévu entre les différentes commandes de fermeture (8), et
- tout le mouvement de fermeture de l'outillage (1, 2) ayant lieu de manière continue et sans interruption de l'opération de fermeture,
**caractérisé en ce que**
après le verrouillage de la tige de piston (11) avec la contre-pièce (13), un flux hydraulique défini (dV/dt) est acheminé aux vérins (9) par l'intermédiaire de l'alimentation (14),
- l'alimentation (14) et l'évacuation (15) étant reliées par une conduite (16), dans laquelle est prévue une soupape anti-retour (17), de manière à ce que de l'huile hydraulique puisse s'écouler de l'évacuation (15) à l'alimentation (14) et
- l'évacuation (15) étant reliée à une citerne hydraulique par l'intermédiaire d'une soupape à pression (18).

2. Procédé pour la fermeture de l'outillage selon la revendication 1,
**caractérisé en ce que**
avant le verrouillage de la tige de piston (11) avec la contre-pièce (13), cette tige est amenée dans une position définie, en particulier dans une position avant de butée.

3. Dispositif pour la réalisation du procédé selon la revendication 1 ou 2, qui présente :
- un outillage (1, 2) composé d'au moins deux pièces, qui est supporté par au moins deux plaques de serrage d'outillage (3, 4) ;
- au moins une commande de conduite (5), qui fait évoluer l'outillage (1, 2) sur une longue course avec une force relativement faible d'une position ouverte en une position fermée ;
- au moins deux commandes de fermeture (8), qui font évoluer l'outillage (1, 2) sur une course courte avec une force relativement importante vers la position fermée,
les commandes de fermeture (8) consistant respectivement en un système hydraulique à vérin-piston avec un vérin (9), un piston (10) et une tige de piston (11) et une alimentation (14) et une évacuation (15) étant prévues pour l'huile hydraulique sur le vérin (9),
la tige de piston (11) supportant à son extrémité un élément de verrouillage (12) qui coopère avec une contre-pièce (13), et
le verrouillage de la tige de piston (11) avec la contre-pièce (13) aux fins d'application de la force de fermeture n'ayant lieu que lorsque l'outillage (1, 2) se trouve presque dans sa position fermée,
**caractérisé en ce que**
sont prévus des moyens qui acheminent aux vérins (9) par l'intermédiaire de l'alimentation (14) un flux hydraulique défini (dV/dt) après le verrouillage de la tige de piston (11) avec la contre-pièce (13),
l'alimentation (14) et l'évacuation (15) sont reliées par une conduite (16), dans laquelle est prévue une soupape anti-retour (17), de manière à ce que de l'huile hydraulique puisse s'écouler de l'évacuation (15) à l'alimentation (14) et
que l'évacuation (15) est reliée à une citerne hydraulique (19) par l'intermédiaire d'une soupape à pression (18).

4. Dispositif selon la revendication 3,
**caractérisé en ce que**
les vérins (9) des commandes de fermeture (8) sont d'une longueur (L) telle qu'aux fins d'un changement d'outillage (1, 2), les tiges de piston (11) avec les éléments de verrouillage (12) se trouvant à leur extrémité puissent être tirées complètement hors de la zone de l'outillage ou de la zone de la plaque de serrage de l'outillage (3, 4).
